# EUROPEAN PATENT APPLICATION

(11) **EP 4 120 501 A1**
(43) Date of publication of application: **18.01.2023**
(21) Application number: 21382642.3
(22) Date of filing: 15.07.2021
(51) Int. Cl.: H02J 3/38, F01K 3/00, H02J 3/28

(54) **METHOD FOR OPERATING A HYBRID ENERGY SYSTEM**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention relates to a method (100) for operating a hybrid energy system (1), the hybrid energy system (1) comprising a wind turbine system (10), a power grid (30) and a heat pump and/or chiller system (20), whereby the method (100) comprises the steps of:
- receiving a power grid information (101) of the power grid (30),
- receiving a power generation capability information (105) of the wind turbine system (10) based on current wind flow and/or wind flow prediction,
- determining an operating strategy (110, 111, 112, 113) for operating the hybrid energy system (1) based on the received power grid information (101) and the received power generation capability information (105), and
- operating the hybrid energy system (1) according to the determined operating strategy (110, 111, 112, 113).

## Description

The invention relates to a method for operating a hybrid energy system and a hybrid energy system, the hybrid energy system comprising a wind turbine system, a power grid and a heat pump and/or chiller system.

Today, residential and industrial heat demand is overwhelmingly covered by fossil energy sources - both at large scale and at small scale. One of the more efficient uses of fossil fuels for heating is the cogeneration of electricity and heat, e.g., from coal-fired power plants - offering around 70 % of fuel utilization. The use of renewables for heating purposes is very limited.

District heating grids and thermal storages are used today to distribute heat in densely populated and industrial areas.

Heat pumps are well-established. Nowadays, they are primarily used for residential heating and offer around 300 % of heat as compared to input power. Due to their superior efficiency, they will become more prevalent for heating purposes in industry and the residential sector.

Today, economic and reliable solutions for the generation of useful heat (and cold) from renewable energies without overloading the power grid are missing. Therefore, it is an object of the invention to provide such an economic, reliable and power grid relieving solution.

This object is solved by the subject-matter of the claims. In particular, this object is solved by a method for operating a hybrid energy system according to claim 1 and a hybrid energy system according to claim 13. Further details of the invention unfold from the other claims as well as the description and the drawings. Thereby, the features and details described in connection with the method of the invention apply in connection with the hybrid energy system of the invention, so that regarding the disclosure of the individual aspects of the invention, it is or can be referred to one another.

According to a first aspect of the invention, the invention solves the object by means of a method for operating a hybrid energy system, the hybrid energy system comprising a wind turbine system, a power grid and a heat pump and/or chiller system, whereby the method comprises the steps of:
- receiving a power grid information of the power grid,
- receiving a power generation capability information of the wind turbine system based on current wind flow and/or wind flow prediction,
- determining an operating strategy for operating the hybrid energy system based on the received power grid information and the received power generation capability information, and
- operating the hybrid energy system according to the determined operating strategy.

The method according to the invention thereby addresses the technical problem of a missing economic solution for the reliable generation of useful heat (and cold) from wind power without overloading the power grid. The method of the invention allows relieving the power grid by coupling not only the power grid to the heat pump and/or chiller system, but also a wind turbine system to the heat pump and/or chiller system. This enables complementary use and operation of wind power from the wind turbine system, and of power from the power grid and the heat pump and/or chiller system. The operation of the hybrid energy system based on the received types of information and the determination based on that information allows reliable heat and/or cold supply from intermittent wind power, maximized thermal efficiency through use of the heat pump and/or chiller system, cost-optimized feed-in of wind power into the connected power grid and the heat pump and/or chiller system as well as avoidance of overloading the power grid through usage of the wind power in the heat pump and/or chiller system. These and further advantages of the method of the invention together with the associated hybrid energy system will be explained more thoroughly throughout the following description.

The wind turbine system may comprise one or several wind turbines. The wind turbines may be cumulated in one or several wind farms.

The heat pump and/or chiller system may comprise one or several heat pumps and/or chillers. Each one of the heat pumps and/or chillers may comprise a compressor, a condenser, an expansion valve and an evaporator as generally known in the art. It may be sufficient to use only one heat pump or chiller because they essentially comprise the same structure, and their functionality or use-scenario may be "reversed" to deliver (and make use) heat energy or cold energy. To be more precise, the same structure may be used to deliver and consequently make use of either the heat energy or cold energy. Using the heat energy or cold energy delivered by the same structure may be a scenario- or case-specific decision. Further, the heat pump and/or chiller system may comprise one or several heat exchangers by means of which the at least one heat pump and/or at least one chiller may be attached to a cold grid, heat grid and/or ambient or waste heat source, as will be explained later in more detail. The heat pump and/or chiller system may further comprise one or several power supplies for each one or all of the heat pump(s) and/or chiller(s) in the heat pump and/or chiller system. The one or several power supplies may be connected alternatively to the power grid and the wind turbine system.

The method may further comprise the step of receiving heat grid and/or cold grid information from a heat grid and/or cold grid attached to the heat pump and/or chiller system. The received heat grid and/or cold grid information may be included in the step of determining the operating strategy. In other words, the step of determining the operating strategy for operating the hybrid energy system may be based on the received power grid information, the received power generation capability information and the received heat grid and/or cold grid information. Accordingly, the operating strategy may be determined optimally with respect to the power generation capability of the wind turbine system, the power grid and the heat grid and/or cold grid. Such heat grid and/or cold grid information may include, for example, a current demand or consumption of heat energy and/or cold energy in the heat grid and/or cold grid or a power demand of the heat pump and/or chiller system (in particular for fulfilling the current demand or consumption of heat energy and/or cold energy by heat users and/or cold users in the heat grid and/or cold grid).

Alternatively, or additionally, the heat grid and/or cold grid information may include filling level information of a heat storage of the heat grid and/or a cold storage of the cold grid. The heat storage and/or cold storage may act as a buffer in the heat grid and/or cold grid such that an amount of heat energy and/or cold energy, which is specified by the size of the respective storage, may be stored in the heat grid and/or cold grid. The filling level information indicates the total or relative amount of heat energy and/or cold energy stored in the respective thermal storage in relation to its size or, in other words, indicates the amount of heat energy and/or cold energy stored in the heat storage and/or cold storage. Accordingly, the heat grid and/or cold grid may for a certain time be operated independent from a power supplied by the power grid and wind turbine system. This independence of the heat grid and/or cold grid may by means of the filling level information be taken into account when determining the operating strategy. This ensures further flexibility for operating the hybrid energy system. For example, a cost-optimized feed-in of wind power into the connected power grid through temporary reliance on the heat storage and/or cold storage becomes possible for the operating strategy. Moreover, avoidance of overloading the power grid through use of the thermal storage(s) becomes possible for the operating strategy. Also, the temperature of the storage and/or thermal grid(s) (heat and/or cold grid(s)) can be another convenient indicator of the amount of thermal energy stored inside them, which may be taken into account, in particular included in the heat grid and/or cold grid information and more particularly the filling level information.

The received power grid information may include a power grid load information and/or an electricity price information. The grid load information indicates a load of the power grid and may also indicate a stability of the power grid. Accordingly, when the power grid information indicates a high load of the power grid, operating strategies may be determined which aim at relieving the grid from the high load.

For example, when the heat grid and/or cold grid requires heat energy and/or cold energy, the wind turbine system may, when it is capable according to the power generation capability information, feed power to the heat pump and/or chiller system such that the heat pump and/or chiller system does not consume power from the power grid or consumes less power from the power grid.

Also, for example, when the power grid stability information indicates that the power grid requires more power, the wind turbine system may, when it is capable according to the power generation capability information, feed power into the power grid. Moreover, for example, when the power grid stability information indicates that the power grid requires power to be consumed due to too much power being in the power grid, the heat pump and/or chiller system may consume power from the power grid.

The electricity price information may be an alternative or additional information about the power grid which may be used to operate the hybrid energy system efficiently not only with respect to power grid stability but also economically. The electricity price may indicate a price for electricity to be fed into the grid and electricity to be consumed. The electricity price may fluctuate with the state of the power grid, in particular its load.

The power generation capability information may include a wind flow information and/or a current power generation rate.

Generally, the power generation capability information is based on the current wind flow experienced on site at the wind turbine system and/or a wind flow prediction. In a current operation of the wind turbine(s) in the wind turbine system, the current wind flow determines the maximum power that can currently be generated by the wind turbine system. However, the power generation capability information itself does not need to be information regarding a wind flow. Instead, or additionally, the power generation capability information may include the amount of power that is currently being generated, that may currently be generated or, in other words, a current power generation rate. The power generation capability information may alternatively or also comprise the prediction of an amount of power that may be generated in the near future based on the wind flow predictions.

Generally, the power grid information, the power generation capability information and the heat grid and/or cold grid information may be sent or taken from the respective subsystems of the hybrid energy system, i.e., the power grid, the wind turbine system and the heat grid and/or cold grid, themselves.

Additionally, or alternatively, it is possible to receive or take some or all of this information from other sources, such as energy markets, weather forecasts and so on, for example via the internet. Merely as an example, when the power grid information includes electricity price information, this piece of information may be received from energy markets via the internet. Merely as a further example, when the power generation capability information comprises wind flow information, in particular wind flow prediction information to estimate the power that may be generated by the wind turbine system or the consistency with which it may be generated in the near future, this piece of information may be received from weather forecasts via the internet.

However, alternatively, or additionally, the wind flow information may also be received from local measurements at the wind turbine system.

The method may include the step of determining whether or not the power grid requires more power based on the power grid information. This determination may be made based on a predetermined threshold value or a set of predetermined threshold values. For example, when the power grid information includes a power grid load information, the predetermined threshold value may be a power grid load of the power grid. Once the power grid load from the power grid load information reaches the threshold value or is above the threshold value, it may be determined that the power grid does not require more power. However, if the power grid load is below the threshold value, it may be determined that the power grid requires more power. Alternatively, or additionally, when the power grid information includes an electricity price information, the predetermined threshold value may be an electricity price. Once the electricity price equals the threshold or is above the threshold, it may be determined that the power grid requires more power. However, if the electricity price is below the threshold value, it may be determined that the power grid does not require more power. Accordingly, the determination of requirement of power in the power grid may be based on different types of power grid information and a combination of these, such as the power grid load and the electricity price. And, the determination of the requirement of more power in the power grid is used in the determination of the operating strategy for considering, as possibility of the strategy, to feed power into the power grid or not.

The determined operating strategy may be a first operating strategy of feeding power generated by the wind turbine system into the power grid when it is determined that the power grid requires more power and when the wind turbine system can generate power based on the power generation capability information. In other words, a first operating strategy, that may be determined for consequent operation thereof by the hybrid energy system is to feed power into the power grid, the power being generated by the wind turbine system. The first operating strategy is determined as operating strategy for operating the hybrid energy system according to it, when in the step of determining whether or not the power grid requires more power based on the power grid information, it is determined that the power grid requires more power, and when the wind turbine system is able to generate any or a sufficient predetermined amount of power to be fed in into the power grid.

Whether or not the wind turbine system can generate the required power is determined from the power generation capability information. For example, if it is windy or, in other words, the wind conditions are strong, the wind turbine system will be able to generate the required power. However, if it is not windy or, in other words, the wind conditions are weak, the wind turbine system might not be able to generate power or not be able to generate a sufficient amount of power for feeding power into the power grid. Accordingly, the requirement of the wind turbine system being able to generate power based on the power generation capability information may in particular be a requirement of the wind turbine system being able to generate a minimum amount of power based on the power generation capability information. The minimum amount of power may be predetermined or determined for a current requirement or need of power of the power grid.

Additionally, or alternatively, the determined operating strategy may be a second operating strategy of operating the heat pump and/or chiller system with power generated by the wind turbine system when it is determined that the power grid does not require more power and the wind turbine system can generate power based on the power generation capability information. Accordingly, when it is determined that the power grid does not require more power in the previous step of determining whether or not the power grid requires more power based on the power grid information, but that the wind turbine system can generate power, the operating strategy may be different from the first operating strategy.

In this case, the power generated by the wind turbine system may be used for powering the heat pump and/or chiller system and thereby supply the heat grid and/or cold grid with thermal energy. This is particularly advantageous because when the power grid does not require power, e.g., the load of the power grid is high, not only feed-in of power from the wind turbine system is avoided, but the heat pump and/or chiller system as consumer of power from the power grid may be disconnected from the power grid through supply of power from the wind turbine system, or at least the power required from the power grid required by the heat pump and/or chiller system may be reduced.

Additionally, or alternatively, the determined operating strategy may be a third operating strategy of operating the heat pump and/or chiller system with power from the power grid when it is determined that the power grid does not require more power and the wind turbine system cannot generate an amount of power sufficient to operate the heat pump and/or chiller system based on the power generation capability information. In other words, when the power grid does not require more power and the wind turbine system is unable to feed any or an amount of power sufficient to power the heat pump and/or chiller system only by means of the renewable energy from the wind turbine system, the power grid is used to feed power to the heat pump and/or chiller system.

Additionally, or alternatively, the determined operating strategy is a fourth operating strategy of releasing heat energy stored in the hot storage in the heat grid and/or releasing cold energy stored in the cold storage in the cold grid, when it is determined that the power grid does not require more power and, in particular, the wind turbine system is unable to feed any or an amount of power sufficient to power the heat pump and/or chiller system only by means of the renewable energy from the wind turbine system. In other words, the buffer of thermal storage(s) may be used in a time at which, for example, the power grid experiences a high load and/or electricity prices are high. Accordingly, the thermal energy stored in the thermal storage(s) may be used instead of the power from the power grid.

Also, it may be provided that the heat storage and/or a cold storage are refilled by means of operating the heat pump and/or chiller system in the course of or as part of the second operating strategy and/or the third operating strategy. Accordingly, the thermal energy is stored in the thermal storages by means of powering the heat pump and/or chiller system with power from the wind turbine system, when the wind turbine system has generated power. Thereby, the thermal energy stored in the thermal storage(s) is based on renewable energies. Alternatively, or additionally, the thermal energy can be generated by the heat pump and/or chiller system operated with power from the power grid at a time at which the power grid does not require more power, e.g., electricity prices are low. Advantageously, by means of the fourth operating strategy, the thermal storages may thereby be refilled or, in other words, replenished with renewable and low-cost energy, while by means of the second and third operating strategies, the thermal storages filled by operating the hybrid energy system according to the fourth operating strategy may be used to allow supply of thermal energy without overloading the power grid, without increasing the costs of the supplied thermal energy and/or based on the renewable energy source of wind power.

The method may include switching between the first, second, third and/or fourth operating strategy based on a change in the received power grid information and the received power generation capability information. Accordingly, the power grid information and the power generation capability information, as well as optionally the heat grid and/or cold grid information, may continuously be updated and received. The determining of the operating strategy may be continuously taken out, e.g., every few seconds, minutes or hours, to determine if an operating strategy according to which the hybrid energy system is being operated is still the one that would be determined as the best operating strategy based on the updated or current power grid information and power generation capability information, as well as optionally heat grid and/or cold grid information. Accordingly, if a new operating strategy is determined based on updated information being received, then the hybrid energy system may switch to the newly determined operating strategy for operation of the hybrid energy system accordingly.

According to a second aspect of the invention, the initially stated object is solved by means of a hybrid energy system comprising a wind turbine system, a power grid, a heat pump and/or chiller system and an operating system, whereby the operating system comprises a communication unit and a computing unit, the operating system being configured to carry out the method according to any of the previous claims.

In the hybrid energy system of the invention, the communication unit is capable of communicating with communication units of the power grid, the heat pump and/or chiller system, the wind turbine system and/or over the internet for receiving the power grid information, the power generation capability information and/or the heat grid and/or cold grid information. The computing unit on the other hand is configured for determining the operating strategy based on the received types of information and consequently operating the hybrid energy system according to the determined operating strategy. For this purpose, the computing unit may, e.g., via the communication unit send corresponding control or operating signals to the wind turbine system, the power grid and/or the heat pump and/or chiller system such that they may carry out the determined operating strategy.

The heat pump and/or chiller system may be connected to a heat grid and/or a cold grid. As discussed above, the heat grid may be provided with a heat storage and/or the cold grid may be provided with a cold storage. The thermal storage(s) may be a containment in the respective grid or the storage capacity of the heat grid and/or cold grid itself. Preferably, the thermal storage(s) are non-pressurized. Also, preferably, the thermal storage(s) are water-based. The thermal storage temperatures may be in the range from 0 - 100 °C. The preferred cold storage temperature of the cold storage is 6 - 10 °C. The preferred heat storage temperature of heat storage is 60 - 100 °C. The capacity of the thermal storage(s) may be at least 100 m³. It is also possible to use a combined thermal storage as heat storage and cold storage for both the heat grid and the cold grid. In this case, the thermal storage may be integrated switchable into the heat grid and the cold grid such that it may store either one of the heat energies of the heat grid and the cold energy of the cold grid. This reduces the costs on the storage side and still allows for high operating flexibility of the hybrid energy system. By means of the thermal storage(s), the storage of electrical energy or, in other words, power, may be avoided. Also, avoidance of generation or regeneration of electrical energy from a thermal process can ensure that there is no loss in efficiency when converting the electrical energy into thermal energy.

Also, the heat pump and/or chiller system may be connected to an ambient heat and/or waste heat source. In combination with the heat grid, this enables usage of the ambient heat and/or waste heat source for generating heat energy usable by heat users in the heat grid.

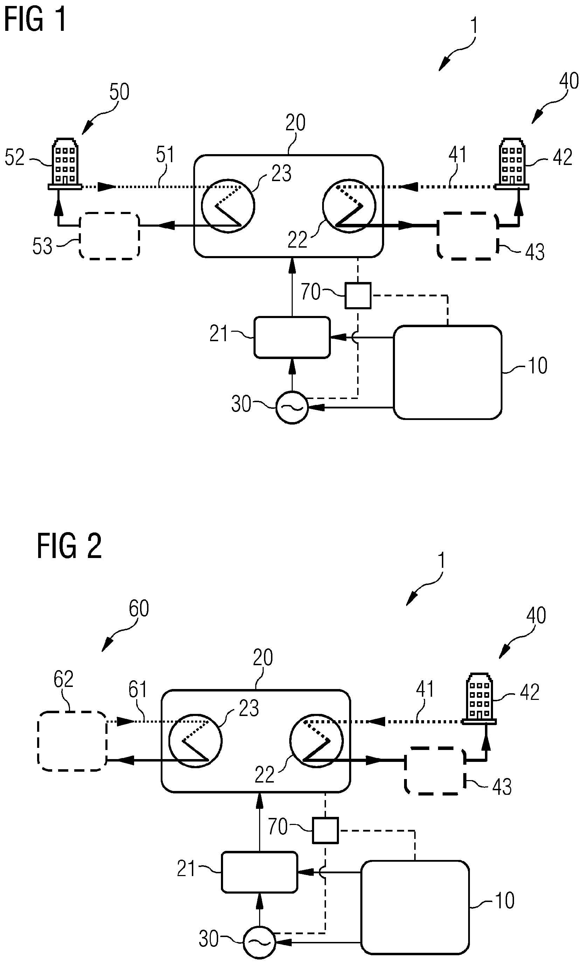

Further advantages, features and details of the invention unfold from the following description, in which by reference to drawings FIGS. 1 - 3, embodiments of the present invention are described in detail. Thereby, the features from the claims as well as the features mentioned in the description can be essential for the invention as taken alone or in an arbitrary combination. In the drawings, there is schematically shown:
- FIG. 1: a schematic illustration of a hybrid energy system according to a first embodiment of the invention,
- FIG. 2: a schematic illustration of a hybrid energy system according to a second embodiment of the invention, and
- FIG. 3: a schematic illustration of a method for operating the hybrid energy system of FIG. 1 or 2 according to an embodiment of the invention.

Same objects in FIGS. 1 - 3 are denominated with the same reference number.

FIG. 1 shows a schematic illustration of a hybrid energy system 1 according to a first embodiment of the invention.

The hybrid energy system 1 comprises a wind turbine system 10, a power grid 30 and a heat pump and chiller system 20. The wind turbine system 10 can consist of one or several wind turbines (not shown). The power grid 30 is electrically connected to the wind turbine system 10. Accordingly, the wind turbine system 10 can feed power generated by its wind turbine(s) into the power grid 30. The power grid 30 is further electrically connected to a power supply 21 of the heat pump and chiller system 20. Accordingly, the power grid 30 is able to power the heat pump and chiller system 20 through the power supply. Further, the wind turbine system 10 is (directly) electrically connected to the power supply 21 of the heat pump and chiller system 20. The heat pump and chiller system 20 may thereby be (directly) powered by the wind turbine system 10 instead or in addition to being powered by means of power from the power grid 30.

The heat pump and chiller system 20 may comprises a single heat pump or chiller (not shown), the functionality or use-scenario of which may be reversed in order to act as the opposite unit, i.e., chiller or heat pump. The heat pump and chiller system 20 may alternatively comprise one or several heat pumps and one or several chillers. The heat pump(s) are connected via one or several heat exchanger(s) 22 to a heat grid 40. By means of the heat exchanger(s), a working fluid of the heat pump(s) exchanges heat with the heat grid 40. The heat grid 40 has a heat cycle 41, heat users 42 and one or several heat storage(s) 43. The heat pump(s) are powered by the power supplied from the wind turbine system 10 and/or the power grid 30 to the heat pump and chiller system 20 and consequently provide heat energy to the heat grid 40 via the heat exchanger(s) 22. The heat grid 40 may be a district heat grid 40. The heat energy provided by the heat pump(s) is forwarded to the heat users 42 by the heat cycle 41. The heat storage 43 may be used as a buffer in the heat grid 40, when the heat energy available in the heat grid 40 is greater than the consumption of the heat users 42.

Similarly, the chiller(s) are connected via one or several heat exchanger(s) 23 to a cold grid 50. Alternatively, in the case of a single heat pump or chiller being used, the functionality or use-scenario of which may be reversed, the same heat pump or chiller may be connected via heat exchanger(s) 23 to the cold grid 50. The cold grid 50 has a cold cycle 51, cold users 52 and one or several cold storage(s) 53. The chiller(s) are powered by the power supplied from the wind turbine system 10 and/or the power grid 30 to the heat pump and chiller system 20 and consequently provide cold energy to the cold grid 50 via the heat exchanger(s) 23. The cold grid 50 may be a district cold grid 50. The cold energy provided by the chiller(s) is forwarded to the cold users 52 by means of the cold cycle 51. The cold storage 53 may be used as a buffer in the cold grid 50, when the cold energy available in the cold grid 50 is greater than the consumption of the cold users 52.

As explained above, in the heat pump and chiller system 20, it is possible to use heat pump(s) and chiller(s) of the heat pump and chiller system 20 for either of the heat grid 40 and cold grid 50 by alternating their functionality between heating and chilling. Accordingly, for example, when a demand of cold energy in the summer is higher than a demand of heat energy, the heat pump(s) may simply be reversed in function so as to function as chiller(s) for generating the cold energy or, to be more precise, to reverse their use-scenario to deliver and make use of the cold energy because purely from a thermodynamic standpoint with heat pumps and chillers normally both, heat and cold are provided at the same time. On the other hand, for example, in winter, the functionality of the chiller(s) may be reversed such that they function as heat pump(s).

The embodiment of the hybrid energy system 1 shown in FIG. 1 has the heat pump and chiller system 20 with heat pump(s) and chiller(s) thermally coupled to a heat grid 40 and a cold grid 50. However, alternatively, the heat pump and chiller system 20 may be only a heat pump system 20 with one or several heat pumps attached to the heat grid 40 or a chiller system 20 with one or several chillers attached to the cold grid 50.

FIG. 2 shows a schematic illustration of a hybrid energy system 1 according to a second embodiment of the invention.

The second embodiment is different from the first embodiment in that there is only a heat pump system 20 without chiller(s), and an ambient heat and/or waste heat grid 60 is coupled to the heat pump system 20 by means of the heat exchanger 23. However, the chiller(s) and cold grid 50 may be provided in the second embodiment of the invention in the same way as explained with respect to the first embodiment of the invention.

The ambient heat and/or waste heat grid 60 has a heat cycle 61 coupled to an ambient heat and/or waste heat source 62 so as to provide ambient heat and/or waste heat for the heat grid 40 in order to increase the heat energy generation.

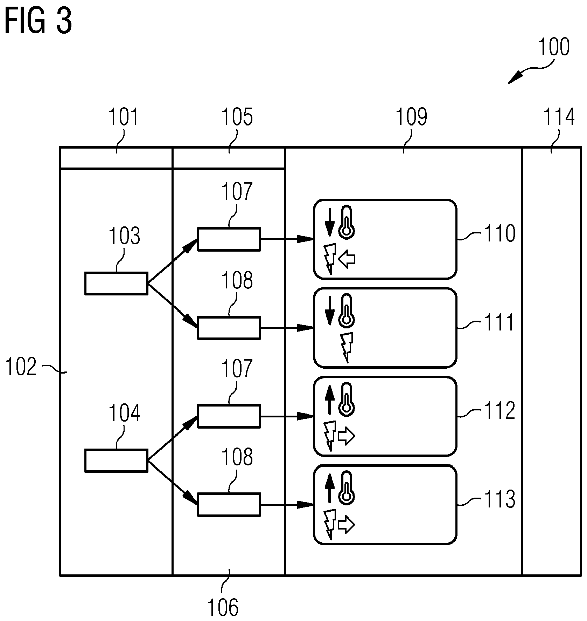

FIG. 3 shows a schematic illustration of a method 100 for operating the hybrid energy system 1 of FIG. 1 or 2 according to an embodiment of the invention.

The operating of the hybrid energy system 1 is carried out by an operating system 70 (see FIGS. 1 and 2). The operating system 70 is connected to the wind turbine system 10, the power grid 30 and the heat pump and/or chiller system 20 for sending respective operating or control signals. Moreover, the operating system 70 comprises a communication unit (not shown) for receiving the types of information as will be explained in the following and a computing unit (not shown) for determining an operating strategy for operating the hybrid energy system 1 as will be explained in the following.

In a first step 102 of method 100, a power grid information 101 is received by the operating system 70. The power grid information 101 may include a power grid load information and/or an electricity price information. Normally, the electricity price information is indicative of the power grid load and thus, both types of information, power grid load and electricity price, are dependent on one another. For the sake of simplicity, in the following, it is considered that the power grid information 101 includes the electricity price information, i.e., a current price or current prices of electricity. The price for feeding electricity or, in other words, power into the power grid 30 by means of the wind turbine system 10 may be different from the price of drawing power from the power grid 30 by the heat pump and/or chiller system 20. In this case, both types of prices may be included as power grid information 101.

The first step 102 or a third step 109 further includes determining whether or not the power grid 30 requires more power based on the power grid information 101. For example, the electricity price for feeding power generated by the wind turbine system 10 into the power grid 30 and/or for drawing power to the heat pump and/or chiller system 20 contained in the power grid information 101 may be compared to one or several predetermined threshold(s). If the electricity price(s) are equal to or above the predetermined threshold(s), i.e., electricity price(s) are high, it is determined that the power grid 30 requires more power. This is shown schematically as outcome 103. Alternatively, if the electricity price(s) are below the predetermined threshold(s), i.e., electricity price(s) are low, it is determined that the power grid 30 does not require more power. This is shown schematically as outcome 104.

A second step 106 is independent from the specific outcome 103, 104 of the first step 102. The second step 102 includes receiving a power generation capability information 105 of the wind turbine system 10. The power generation capability information 105 is based on the current wind flow and/or wind flow prediction at the site of the wind turbine system 10 and indicates the capability of generating any power or an amount of power by means of the wind turbine(s) in the wind turbine system 10. The power generation capability information 105 may include a wind flow information and/or a current power generation rate, for example. The wind flow information may include predictions of wind flow in the near future.

The second step 106 or the third step 109 further includes determining whether or not any or a required minimum amount of power, which may also be referred to as a threshold, is being generated by the wind turbine system 10. In other words, it is determined whether it is sufficiently windy to generate wind power or not. The outcomes 107 indicate a windy situation at the site of the wind turbine system 10 or, in other words, a generation of power or generation of the required minimum amount of power. The outcomes 108 indicate a non-windy situation at the site of the wind turbine system 10 or, in other words, no generation of power or a power generation not meeting the required minimum amount of power.

Then, in the third step 109, one of the predetermined operating strategies 110, 111, 112, 113 for operating the hybrid energy system 1 in a fourth step 114 of operating the hybrid energy system 1 is determined based on the received power grid information 101 and the received power generation capability information 105, in particular the outcomes 103, 104, 107, 108.

Generally, the method 100 may further comprise the step of receiving heat grid and/or cold grid information from the heat grid 40 and/or cold grid 50. The heat grid and/or cold grid information may include filling level information of the heat storage 43 and/or the cold storage 53, for example. This received heat grid and/or cold grid information may be included in the third step 109 of determining the operating strategy 110, 111, 112, 113 as will be explained by way of example in the following.

One of the operating strategies 110, 111, 112, 113 that may be determined is a first operating strategy 110. The first operating strategy 110 is to feed power generated by the wind turbine system 10 into the power grid 30. The first operating strategy 110 is determined and executed by the operating system 70 when it is determined that the power grid 30 requires more power (outcome 103) and when the wind turbine system 10 can generate any or the required minimum amount of power based on the power generation capability information 105 (outcome 107). Practically speaking, the electricity prices and/or the load of the power grid 30 are high according to the outcome 103, and the wind turbine system 10 experiencing windy conditions is being used to supply power required at the power grid 30 to the power grid 30 by means of operating the hybrid energy system 1 according to the first operating strategy 110.

Another one of the operating strategies 110, 111, 112, 113 that may be determined is a second operating strategy 112. The second operating strategy 112 is to operate the heat pump and/or chiller system 20 with power generated by the wind turbine system 10. The second operating strategy 112 is determined and executed by the operating system 70 when it is determined that the power grid 30 does not require more power (outcome 104) and when the wind turbine system 10 can generate any or the required minimum amount of power based on the power generation capability information 105 (outcome 107). Practically speaking, the electricity prices and/or the load of the power grid 30 are low according to the outcome 104, and the wind turbine system 10 experiencing windy conditions is being used to supply power to the heat pump and/or chiller system 20 by means of operating the hybrid energy system 1 according to the second operating strategy 112 rather than feeding power into the power grid 30. Also, for the second operating strategy 112, the filling level information of the heat storage 43 and/or the cold storage 53 may be considered. For example, if the filling level or, in other words, the amount of heat energy and/or cold energy stored in the respective storage(s) 43, 53 is low, and the demand of the heat users 42 and/or the cold users 52 is met, the power provided by the wind turbine system 10 may be used to refill the respective storage(s) 43, 53.

A further one of the operating strategies 110, 111, 112, 113 that may be determined is a third operating strategy 114. The third operating strategy 114 is to operate the heat pump and/or chiller system 20 with power from the power grid 30. The third operating strategy 114 is determined and executed by the operating system 70 when it is determined that the power grid 30 does not require more power (outcome 104) and when the wind turbine system 10 cannot generate any or the required minimum amount of power based on the power generation capability information 105 (outcome 108). Practically speaking, the electricity prices and/or the load of the power grid 30 are low according to the outcome 104, and the wind turbine system 10 is not experiencing sufficiently windy conditions. This determined situation is used in particular when the filling levels of the respective storage(s) 43, 53 are low, to power the heat pump and/or chiller system 20 with power from the power grid 30 according to the third operating strategy 114 without overloading the power grid 30.

A further one of the operating strategies 110, 111, 112, 113 that may be determined is a fourth operating strategy 111. The fourth operating strategy 114 is to mitigate the power demand through sector coupling. In particular, the fourth operating strategy 111 may be to release heat energy stored in the hot storage 43 and/or to release cold energy stored in the cold storage 53 when it is determined that the power grid 30 requires more power (outcome 103) and the wind turbine system 10 cannot generate any or the required minimum amount of power based on the power generation capability information 105 (outcome 108), or the power generated by the wind turbine system 10 shall or is being used to feed it into the power grid 30. This determination may include the filling level information of the respective storage(s) 43, 53 to ensure sufficient heat energy and/or cold energy in the respective storage(s) 43, 53. Practically speaking, the electricity prices and/or the load of the power grid 30 are high according to the outcome 103, and the wind turbine system 10 is not experiencing windy conditions or its power is used for feeding it into the power grid 30. This determined situation is used, in particular when the filling level of the respective storage(s) 43, 53 is high, to supply the heat users 42 and/or cold users 52 with heat and/or cold energy without overloading the power grid 30.

The different types of information 101, 105 change with time and accordingly are continuously received as updated information 101, 105 by the operating system 70 repeating the steps 102, 106, 109 in order to react to changes requiring switching from one of the operating strategies 110, 111, 112, 113 to another one and ensure optimal operation of the hybrid energy system 1 in the fourth step 114.

## Claims

1. Method (100) for operating a hybrid energy system (1), the hybrid energy system (1) comprising a wind turbine system (10), a power grid (30) and a heat pump and/or chiller system (20), whereby the method (100) comprises the steps of:
- receiving a power grid information (101) of the power grid (30),
- receiving a power generation capability information (105) of the wind turbine system (10) based on current wind flow and/or wind flow prediction,
- determining an operating strategy (110, 111, 112, 113) for operating the hybrid energy system (1) based on the received power grid information (101) and the received power generation capability information (105), and
- operating the hybrid energy system (1) according to the determined operating strategy (110, 111, 112, 113).

2. Method (100) according to claim 1, whereby the method (100) further comprises the step of receiving heat grid and/or cold grid information from a heat grid (40) and/or cold grid (50) attached to the heat pump and/or chiller system (20) and including the received heat grid and/or cold grid information in the step of determining the operating strategy.

3. Method (100) according to claim 2, whereby the heat grid and/or cold grid information includes filling level information of a heat storage (43) of the heat grid (40) and/or a cold storage (53) of the cold grid (50).

4. Method (100) according to any of the previous claims, whereby the received power grid information (101) includes a power grid load information and/or an electricity price information.

5. Method (100) according to any of the previous claims, whereby the power generation capability information (105) ineludes a wind flow information and/or a current power generation rate.

6. Method (100) according to any of the previous claims, whereby the method (100) includes the step of determining whether or not the power grid (30) requires more power based on the power grid information (101).

7. Method (100) according to claim 6, whereby the determined operating strategy (110, 111, 112, 113) is a first operating strategy (110) of feeding power generated by the wind turbine system (10) into the power grid (30) when it is determined that the power grid (30) requires more power and when the wind turbine system (10) can generate power based on the power generation capability information (105).

8. Method (100) according to claim 6 or 7, whereby the determined operating strategy (110, 111, 112, 113) is a second operating strategy (112) of operating the heat pump and/or chiller system (20) with power generated by the wind turbine system (10) when it is determined that the power grid (30) does not require more power and the wind turbine system (20) can generate power based on the power generation capability information (105).

9. Method (100) according to any of claims 6 - 8, whereby the determined operating strategy (110, 111, 112, 113) is a third operating strategy (114) of operating the heat pump and/or chiller system (20) with power from the power grid (30) when it is determined that the power grid (30) does not require more power and the wind turbine system (10) cannot generate an amount of power sufficient to operate the heat pump and/or chiller system (20) based on the power generation capability information (105).

10. Method (100) according to claim 3 and any of claims 6 - 9, whereby the determined operating strategy (110, 111, 112, 113) is a fourth operating strategy (111) of releasing heat energy stored in the hot storage (43) in the heat grid (40) and/or releasing cold energy stored in the cold storage (53) in the cold grid (50) when it is determined that the power grid (30) does not require more power.

11. Method (100) according to claim 3 and claim 8 and/or 9, whereby the heat storage (43) and/or a cold storage (53) are refilled by means of operating the heat pump and/or chiller system (20).

12. Method (100) according to any of claims 7 - 11, whereby the method (100) includes switching between the first, second, third and/or fourth operating strategy (110, 111, 112, 113) based on a change in the received power grid information (101) and the received power generation capability information (105).

13. Hybrid energy system (1) comprising a wind turbine system (10), a power grid (30), a heat pump and/or chiller system (20) and an operating system (70), whereby the operating system (70) comprises a communication unit and a computing unit, the operating system (70) being configured to carry out the method (100) according to any of the previous claims.

14. Hybrid energy system (1) according to claim 13, whereby the heat pump and/or chiller system (20) is connected to a heat grid (40) and/or a cold grid (50).

15. Hybrid energy system (1) according to claim 13 or 14, whereby the heat pump and/or chiller system (20) is connected to an ambient heat and/or waste heat source (62).
